# EUROPÄISCHE PATENTANMELDUNG

(11) **EP 4 592 252 A1**
(43) Veröffentlichungstag der Anmeldung: **30.07.2025**
(21) Anmeldenummer: 25153323.8
(22) Anmeldetag: 22.01.2025
(51) Int. Cl.: C02F 1/467

(54) **VORRICHTUNG ZUM VERSPRÜHEN VON FLÜSSIGKEIT UND KÜHLANORDNUNG ZUM KÜHLEN MINDESTENS EINES BEREICHS**

(30) Priorität: 25.01.2024 DE 102024102145
(71) Anmelder: PaSta Aktiengesellschaft, 9490 Vaduz (LI)
(72) Erfinder: Stadelmann, Heinz Willi, 9491 Ruggell (LI)
(74) Vertreter: DREISS Patentanwälte PartG mbB

(57) **Zusammenfassung**

Die Erfindung betrifft eine Vorrichtung zum Versprühen von Flüssigkeit mit Merkmalen des Anspruchs 1, eine Kühlanordnung zum Kühlen mindestens eines Bereichs mit einer derartigen Vorrichtung und eine Verwendung einer derartigen Vorrichtung bzw. einer derartigen Kühlanordnung.

## Beschreibung

Die Erfindung betrifft eine Vorrichtung zum Versprühen von Flüssigkeit mit Merkmalen des Anspruchs 1, eine Kühlanordnung zum Kühlen mindestens eines Bereichs mit Merkmalen des Anspruchs 7 und eine Verwendung einer derartigen Vorrichtung oder einer derartigen Kühlanordnung mit Merkmalen des Anspruchs 9.

Die Temperaturen in Städten können insbesondere während der Sommermonate extrem ansteigen und zu einer ernst zu nehmenden Bedrohung werden. Eine Möglichkeit gegen die hohen Temperaturen vorzugehen, kann eine Wasserkühlung, d.h. eine Abkühlung durch Wasser darstellen. Hierbei kann die kühlende Wirkung des Wassers, insbesondere beim Verdunsten, ausgenutzt werden. Bei hohen Temperaturen und/oder bei großen Wasserreservoirs kann im Kühlwasser eine akute Gefährdung durch thermophile Keime und/oder Bakterien, wie bspw. Legionellen, bestehen.

CN 2 17 838 455 U offenbart eine elektrokatalytische Vorrichtung für Brauchwasser, bei der Brauchwasser durch einen Einlass in die Vorrichtung geleitet, mittels Kathode und Anode elektrokatalytisch behandelt und aus dem Auslass mittels Ventil ohne Versprühen ausgeleitet wird.

JP 2000 - 5 766 A offenbart ein Verfahren zum Herstellen von gesundheitsförderndem Wasser, bei dem mittels einer Düse Flüssigkeit in einen Tank mit zwei Elektroden gesprüht werden kann, jedoch nicht aus dem Tank heraus.

JP 2014 - 65 966 A beschreibt einen Generator zur Behandlung von Wasser mittels Elektrolyse, wobei keine Düsen vorhanden sind.

KR 10 2 433 625 B1 offenbart eine Vorrichtung zum Reinigen von Luft, bei der in einem Gehäuse mittels Düsen Flüssigkeit auf Filter versprüht wird, es erfolgt jedoch kein Versprühen aus dem Gehäuse heraus.

Es ist Aufgabe der vorliegenden Erfindung, eine Vorrichtung zum Versprühen von Flüssigkeit, eine Kühlanordnung zum Kühlen mindestens eines Bereichs und eine Verwendung einer derartigen Vorrichtung oder einer derartigen Kühlanordnung bereitzustellen, wobei die obigen Nachteile ausgeräumt werden.

Die obige Aufgabe wird durch eine Vorrichtung zum Versprühen von Flüssigkeit mit den Merkmalen des Anspruchs 1 gelöst. Bei der Flüssigkeit kann es sich um Wasser handeln. Die Vorrichtung umfasst mindestens einen Elektrokatalysator zum Reinigen der Flüssigkeit Der Elektrokatalysator ist insbesondere zur Reinigung der Flüssigkeit mittels Elektrokatalyse eingerichtet. Der Elektrokatalysator kann als ein Oxidationskatalysator ausgebildet sein. Die Vorrichtung umfasst zudem einen Strom- und/oder Spannungsanschluss zum Versorgen des Elektrokatalysators mit elektrischem Strom und/oder elektrischer Spannung. Die Vorrichtung umfasst einen Flüssigkeitsanschluss zum Einleiten der Flüssigkeit in die Vorrichtung, wobei die Vorrichtung und insbesondere auch der Elektrokatalysator durch die Flüssigkeit durchströmt wird, und eine Düse zum Versprühen der Flüssigkeit aus der Vorrichtung. Die Düse kann zum Verteilen der Flüssigkeit außerhalb der Vorrichtung eingerichtet sein.

Die Vorrichtung kann eine Grundfläche von 0,25 m² (Quadratmeter) bis 1 m² aufweisen. Die Vorrichtung kann eine Höhe von 1,5 m (Meter) bis 2 m aufweisen. Somit kann die Vorrichtung möglichst platzsparend aufgestellt werden, wobei die Düse auf einer (für eine normal große Person) optimalen Höhe angeordnet werden kann.

Hierdurch kann eine Wasserkühlung mit einem geeigneten Hygiene- und Effizienzkonzept umgesetzt werden. Durch die Vorrichtung kann der Flüssigkeitsverbrauch, insbesondere durchs Versprühen mittels der Düse, minimiert bzw. optimiert werden. Versprühte Flüssigkeit, insbesondere Wasser, kann einen optimalen Abkühleffekt bei gleichzeitig maximaler Flüssigkeitseinsparung erzielen. Zudem kann mittels des Elektrokatalysators bzw. der Elektrokatalyse eine Gefährdung durch pathogene thermophile Keime und/oder Bakterien, wie bspw. Legionellen, ausgeräumt oder zumindest minimiert werden. Des Weiteren kann ein möglicher Biofilm, der sonst bei einer Düse zu einer Verstopfung führen könnte, verhindert oder zumindest reduziert werden. Ein mit einer derartigen Verstopfung verbundener Reinigungs- und/oder Wartungsaufwand kann verhindert oder zumindest reduziert werden.

Insbesondere werden beim Elektrokatalysator keine Silber-Ionen ausgenutzt. Somit kann die Flüssigkeit desinfektionsmittelfrei und frei von Schwermetallen gehalten werden. Das ist umweltfreundlich und nachhaltig. Vielmehr kann die Oxidationskraft von Silber ausgenutzt werden. Der Elektrokatalysator kann Silber, insbesondere Ag⁰/Ag⁺-Kontakte, umfassen. Die Ag⁰/Ag⁺-Kontakte können durch eine partielle Silberoxidation an einer Oberfläche auf atomarer Ebene umgesetzt werden. Die Ag⁰/Ag⁺-Kontakte können als Mikroelektroden aufgefasst werden. Diese können durch eine angelegte elektrische Spannung mit Elektronen, die als Oxidationsmittel dienen können, versorgt werden. Der Elektrokatalysator kann eine Vielzahl von Mikroelektroden aus Silber umfassen. Die Mikroelektroden können als Dosiereinheit für die Elektronen der Elektrokatalyse des Elektrokatalysators dienen. Die Mikroelektroden, insbesondere aus Silber, können gleichzeitig als Katalysator und Elektrode fungieren.

Mittels des Elektrokatalysators kann eine Reinigung der Flüssigkeit durch Oxidation mittels Elektronen aus dem elektrischen Stromnetz umgesetzt werden. Elektrischer Strom dient dabei als gutes Oxidationsmittel. Bei Verwendung von Solarstrom ist dies umweltfreundlich und nachhaltig. Mittels des Elektrokatalysators kann eine Reinigung, insbesondere Desinfektion, der Flüssigkeit umgesetzt werden ohne Einsatz chemischer oder auf harter Strahlung basierender Verfahren. Insbesondere die elektro-katalytischen Eigenschaften des Elektrokatalysators können ein Medium schaffen, das ein Keimwachstum und somit die Bildung von Biofilm verhindert. Eine mittels des Elektrokatalysators gereinigte Flüssigkeit ist insbesondere hygienisch und unbedenklich.

Durch den Einsatz des Elektrokatalysators kann eine Belastung durch Desinfektionsnebenprodukte, insbesondere auf eine unvermeidliche technische Menge, reduziert werden. Es können lange Standzeiten und ein geringer Wartungsaufwand der Vorrichtung erzielt werden. Für die Wirkungsweise des Elektrokatalysators wird lediglich elektrischer Strom und/oder elektrische Spannung und natürlich vorkommender Sauerstoff, welcher insbesondere eine die Reaktion beschleunigende Wirkung besitzt, benötigt (Elektrokatalyse). Mittels des Elektrokatalysators kann ein effektiver Schutz gegen Legionellen und andere pathogene Keime, wie bspw. multiresistente Keime aus der Geflügelzucht (Salmonellen) und/oder Pseudomonaden, erzielt werden.

Gemäß einer Weiterbildung der Vorrichtung kann die Vorrichtung einen ersten Filter zum Filtern der Flüssigkeit umfassen. Der erste Filter kann als ein Membranfilter ausgebildet sein. Der erste Filter kann nach dem Elektrokatalysator angeordnet sein. Der erste Filter kann dem Elektrokatalysator nachgeschaltet sein.

Hierdurch kann mit einfachen Mitteln der Reinigungsgrad der Flüssigkeit weiter erhöht werden.

Gemäß einer Weiterbildung der Vorrichtung kann die Vorrichtung einen zweiten Filter zum Filtern der Flüssigkeit umfassen. Der zweite Filter kann vor dem Flüssigkeitsanschluss angeordnet sein. Der zweite Filter kann insbesondere einem (groben) Vorfiltern der Flüssigkeit dienen, bevor diese in den Elektrokatalysator eingeleitet wird.

Hierdurch kann mit einfachen Mitteln die Flüssigkeit vorgefiltert und/oder der Reinigungsgrad der Flüssigkeit weiter erhöht werden.

Gemäß einer Weiterbildung der Vorrichtung kann die Vorrichtung eine Pumpe zum Fördern der Flüssigkeit umfassen. Insbesondere kann der Druck, mit dem die Flüssigkeit aus der Düse versprüht wird, mittels der Pumpe wunschgemäß eingestellt werden.

Hierdurch kann mit einfachen Mitteln die Flüssigkeit gefördert und insbesondere (mit einem gewünschten Druck) aus der Düse versprüht werden.

Gemäß einer Weiterbildung der Vorrichtung kann die Vorrichtung eine Kühleinrichtung zur Kühlung der Flüssigkeit umfassen. Die Kühleinrichtung kann ein Peltier Element umfassen oder als ein Peltier Element ausgebildet sein.

Hierdurch kann mit einfachen Mitteln die Flüssigkeit gekühlt und somit die Kühlwirkung der Vorrichtung insgesamt weiter verbessert werden.

Gemäß einer Weiterbildung der Vorrichtung kann die Vorrichtung eine Photovoltaik-Anlage umfassen. Die Photovoltaik-Anlage kann zur Versorgung des Elektrokatalysators, der Pumpe und/oder der Kühleinrichtung mit elektrischem Strom und/oder elektrischer Spannung ausgebildet sein. Die Photovoltaik-Anlage kann eine Batterie bzw. einen Akkumulator zum Zwischenspeichern der elektrischen Energie umfassen.

Hierdurch können mit einfachen Mitteln und/oder unabhängig von einem (netzgebundenen) Strom-/Spannungsanschluss der Elektrokatalysator, die Pumpe und/oder die Kühleinrichtung mit elektrischem Strom und/oder elektrischer Spannung versorgt werden.

Die obige Aufgabe wird weiter durch eine Kühlanordnung zum Kühlen mindestens eines Bereichs (Raumbereichs) mit den Merkmalen des Anspruchs 7 gelöst. Die Kühlanordnung umfasst mindestens eine Vorrichtung gemäß obiger Ausführungen. Die Kühlanordnung ist derart eingerichtet, dass die mittels der Düse aus der Vorrichtung versprühte Flüssigkeit zumindest bereichsweise in den Bereich eingespritzt wird.

Hinsichtlich der damit erzielbaren Vorteile wird auf die diesbezüglichen Ausführungen zur Vorrichtung verwiesen. Zur weiteren Ausgestaltung der Kühlanordnung können die im Zusammenhang mit der Vorrichtung beschriebenen und/oder die nachfolgend noch erläuterten Maßnahmen dienen.

Gemäß einer Weiterbildung der Kühlanordnung kann die Kühlanordnung mehrere Vorrichtungen umfassen. Die Vorrichtungen können an jeweils zwei gegenüberliegenden Seiten des Bereichs versetzt zueinander angeordnet sein.

Hierdurch kann mit möglichst wenig Vorrichtungen ein möglichst großer Bereich gekühlt werden. Die Vorrichtungen können so möglichst effizient eingesetzt werden.

Die obige Aufgabe wird durch eine Verwendung einer Vorrichtung gemäß obiger Ausführungen und/oder einer Kühlanordnung gemäß obiger Ausführungen zur Kühlung mindestens eines Bereichs mit den Merkmalen des Anspruchs 9 gelöst. Dabei ist der Bereich als ein von einer Person begehbarer Bereich ausgebildet. Der Bereich kann als ein (Geh-)Weg oder eine Straße ausgebildet sein. Der Bereich kann ebenso zumindest bereichsweise als ein Parkplatz, eine Autobahn, eine Haltestelle, ein Bahnhof, ein Stadium, eine Stadthalle, ein Sportplatz und/oder eine ähnliche, insbesondere innerstädtische, Einrichtung ausgebildet sein.

Hinsichtlich der damit erzielbaren Vorteile wird auf die diesbezüglichen Ausführungen zur Vorrichtung und/oder zur Kühlanordnung verwiesen. Zur weiteren Ausgestaltung der Verwendung können die im Zusammenhang mit der Vorrichtung und/oder mit der Kühlanordnung beschriebenen und/oder die nachfolgend noch erläuterten Maßnahmen dienen.

Gemäß einer Weiterbildung der Verwendung kann die Vorrichtung oder die Kühlanordnung in einen Trinkbrunnen integriert sein. Mit anderen Worten, die Vorrichtung oder die Kühlanordnung können in einem Trinkbrunnen verwendet werden.

Hierdurch kann mit einfachen Mitteln ein (bereits vorhandener) Trinkbrunnen aufgerüstet werden. Dabei kann das Wasser aus dem Trinkbrunnen als Flüssigkeit für die Vorrichtung bzw. die Kühlanordnung dienen. Der Trinkbrunnen kann so um eine effiziente und damit wassersparende Abkühl-Funktion ergänzt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorrichtung zum Versprühen von Flüssigkeit gemäß einem ersten Ausführungsbeispiel;
- Fig. 2: eine schematische Darstellung der Vorrichtung zum Versprühen von Flüssigkeit gemäß einem zweiten Ausführungsbeispiel;
- Fig. 3: eine schematische Darstellung einer Kühlanordnung zum Kühlen mindestens eines Bereichs gemäß einem ersten Ausführungsbeispiel; und
- Fig. 4: eine schematische Darstellung der Kühlanordnung zum Kühlen mindestens eines Bereichs gemäß einem zweiten Ausführungsbeispiel.

In der nachfolgenden Beschreibung sowie in den Figuren tragen sich entsprechende Bauteile und Elemente gleiche Bezugszeichen.

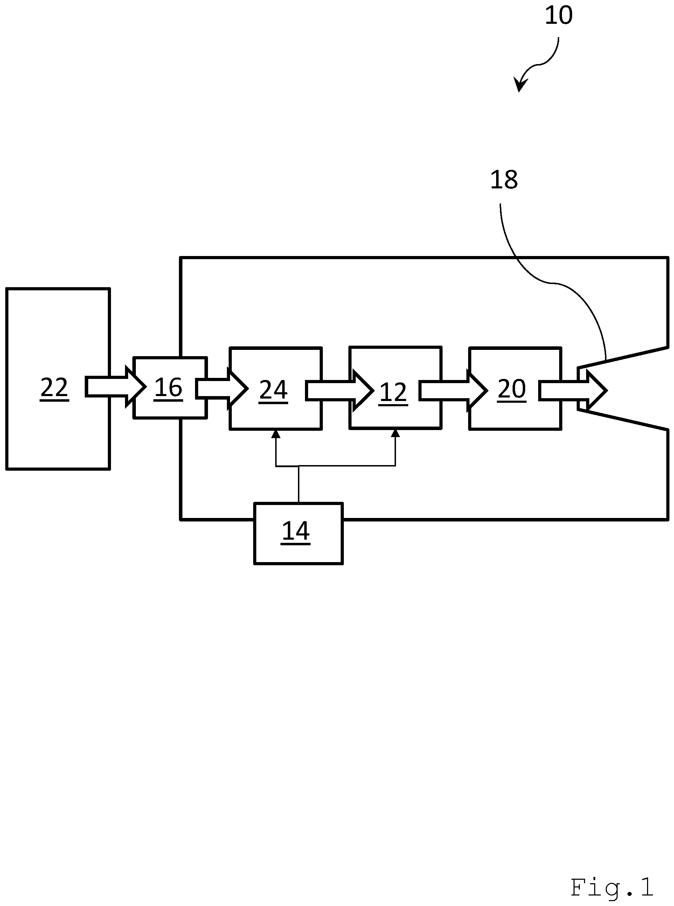

Figur 1 zeigt eine schematische Darstellung einer Vorrichtung 10 zum Versprühen von Flüssigkeit gemäß einem ersten Ausführungsbeispiel. Bei der Flüssigkeit kann es sich um Wasser handeln.

Die Vorrichtung 10 umfasst vorliegend einen Elektrokatalysator 12 zum Reinigen der Flüssigkeit. Die Vorrichtung 10 umfasst einen Strom- und/oder Spannungsanschluss 14 zum Versorgen des Elektrokatalysator 12 mit elektrischem Strom und/oder elektrischer Spannung. Die Vorrichtung 10 umfasst einen Flüssigkeitsanschluss 16 zum Einleiten der Flüssigkeit in die Vorrichtung 10 und eine Düse 18 zum Versprühen der Flüssigkeit aus der Vorrichtung 10.

Die Vorrichtung 10 umfasst vorliegend einen ersten Filter 20 zum Filtern der Flüssigkeit. Der erste Filter 20 ist vorliegend dem Elektrokatalysator 12 nachgeordnet bzw. nachgeschaltet. Der erste Filter 20 kann als ein Membranfilter ausgebildet sein. So kann die Flüssigkeit mittels des ersten Filters 20 gefiltert werden, bevor diese in die Düse 18 gelangt und mittels der Düse 18 aus der Vorrichtung 10 versprüht wird.

Die Vorrichtung 10 kann einen zweiten Filter 22 zum Filtern der Flüssigkeit umfassen. Der zweite Filter 22 ist vor dem Flüssigkeitsanschluss 16 angeordnet. Der zweite Filter 22 dient insbesondere dem (groben) Vorfiltern der Flüssigkeit.

Die Vorrichtung 10 umfasst vorliegend eine Pumpe 24 zum Fördern der Flüssigkeit. Mit anderen Worten, die Flüssigkeit wird insbesondere mittels der Pumpe 24 durch die Vorrichtung 10 gepumpt und aus der Düse 18 befördert. Zudem kann ein zum Versprühen erforderlicher bzw. gewünschter Druck mittels der Pumpe 24 aufgebaut (bzw. eingestellt) werden.

Vorliegend ist ein Pfad der Flüssigkeit mittels dicken Pfeilen dargestellt. Die Pfade des elektrischen Stroms und/oder der elektrischen Spannung bzw. entsprechende elektrische Leitungen sind vorliegend mittels dünnen Pfeilen dargestellt.

Vorliegend versorgt der Strom- und/oder Spannungsanschluss 14 den Elektrokatalysator 12 und die Pumpe 24.

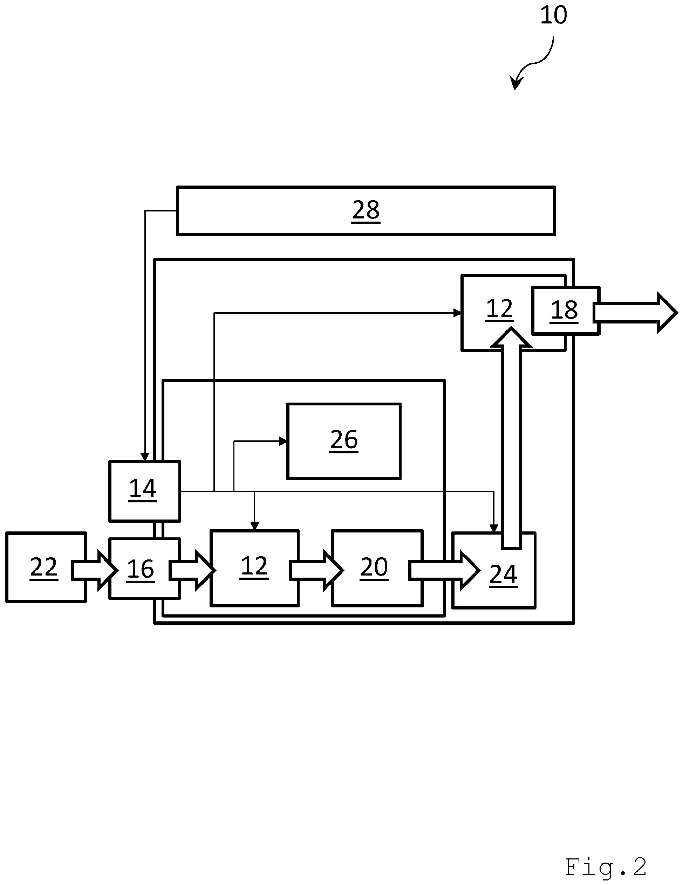

Figur 2 zeigt eine schematische Darstellung der Vorrichtung 10 zum Versprühen von Flüssigkeit gemäß einem zweiten Ausführungsbeispiel. Das zweite Ausführungsbeispiel unterscheidet sich von dem ersten, in Figur 1 gezeigten, Ausführungsbeispiel durch Folgendes:
Die Vorrichtung 10 weist vorliegend zwei Elektrokatalysatoren 12 auf. Ein erster Elektrokatalysator 12 ist zwischen dem Flüssigkeitsanschluss 16 und dem ersten Filter 20 angeordnet. Hierdurch kann insbesondere ein Schutz des ersten Filters 20 durch den ersten Elektrokatalysator 12 umgesetzt werden.

Ein zweiter Elektrokatalysator 12 ist vor der Düse 18 angeordnet bzw. in die Düse 18 integriert. Hierdurch kann insbesondere ein Schutz der Düse 18 (bspw. gegen Verblockung) durch den zweiten Elektrokatalysator 12 umgesetzt werden.

Damit wird die Flüssigkeit an zwei separaten Stellen mittels des jeweiligen Elektrokatalysator 12 gereinigt bzw. gefiltert. Damit kann jeweils einer der beiden Elektrokatalysatoren 12 eine Polizeifilter-Funktion übernehmen.

Die Pumpe 24 ist vorliegend zwischen dem ersten Filter 20 und dem zweiten Elektrokatalysator 12 angeordnet. Mittels der Pumpe 24 kann insbesondere in dem zweiten Elektrokatalysator 12 und/oder der Düse 18 ein gewünschter Flüssigkeitsdruck eingestellt werden.

Die Vorrichtung 10 umfasst vorliegend eine Kühleinrichtung 26 zur Kühlung der Flüssigkeit. Die Kühleinrichtung 26 kann ein Peltier Element umfassen oder als ein Peltier Element ausgebildet sein.

Die Vorrichtung 10 umfasst vorliegend eine Photovoltaik-Anlage 28. Die Photovoltaik-Anlage 28 ist vorliegend zur Versorgung der beiden Elektrokatalysatoren 12, der Pumpe 24 und der Kühleinrichtung 26 mit elektrischem Strom und/oder elektrischer Spannung ausgebildet. Die Photovoltaik-Anlage 28 kann eine Batterie bzw. Akkumulator (nicht dargestellt) zum Zwischenspeichern der elektrischen Energie umfassen.

Auch hier ist, analog zur Figur 1, ein Pfad der Flüssigkeit mittels dicken Pfeilen dargestellt. Die Pfade des elektrischen Stroms und/oder der elektrischen Spannung bzw. entsprechende elektrische Leitungen sind vorliegend mittels dünnen Pfeilen dargestellt.

Vorliegend versorgt der Strom- und/oder Spannungsanschluss 14 die beiden Elektrokatalysatoren 12, die Pumpe 24 und die Kühleinrichtung 26. Hierfür kann die Photovoltaik-Anlage 28 mit dem Strom- und/oder Spannungsanschluss 14 elektrisch verbunden sein.

Es ist ebenso denkbar, dass die Vorrichtung 10 zusätzlich zu der Photovoltaik-Anlage 28 an ein (öffentliches) elektrisches Strom-/Spannungsnetz angeschlossen sein kann. Mit anderen Worten, der Strom- und/oder Spannungsanschluss 14 kann zusätzlich zu der elektrischen Verbindung mit der Photovoltaik-Anlage 28 mit einem (öffentlichen) elektrischen Strom-/Spannungsnetz elektrisch verbunden sein.

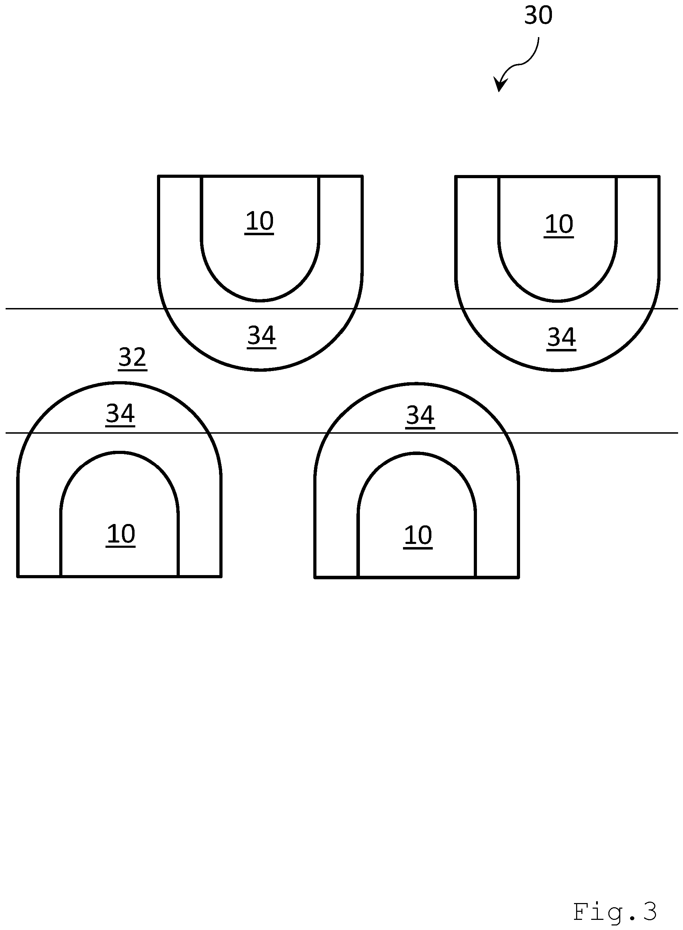

Figur 3 zeigt eine schematische Darstellung einer Kühlanordnung 30 zum Kühlen mindestens eines Bereichs 32 gemäß einem ersten Ausführungsbeispiel.

Die Kühlanordnung 30 umfasst vorliegend vier Vorrichtungen 10 gemäß obiger Ausführungen. Bei den Vorrichtungen 10 kann es sich um die in Figur 1 und/oder die in Figur 2 gezeigten Vorrichtungen 10 handeln. Die Kühlanordnung 30 ist derart eingerichtet, dass die mittels der jeweiligen Düse 18 aus der Vorrichtung 10 versprühte Flüssigkeit zumindest bereichsweise in den Bereich 32 eingespritzt wird.

Vorliegend wird die mittels der jeweiligen Düse 18 aus den Vorrichtungen 10 versprühte Flüssigkeit jeweils als ein Kühlbereich 34 dargestellt. Die jeweiligen Kühlbereiche 34 und der (zu kühlende) Bereich 32 überlappen sich entsprechend.

Vorliegend sind die Vorrichtungen 10 an jeweils zwei gegenüberliegenden Seiten des Bereichs 32 versetzt zueinander angeordnet. Somit kann eine möglichst große Überlappung zwischen den Kühlbereichen 34 der Vorrichtungen 10 und dem Bereich 32 umgesetzt werden. Der Bereich 32 kann so optimal gekühlt werden.

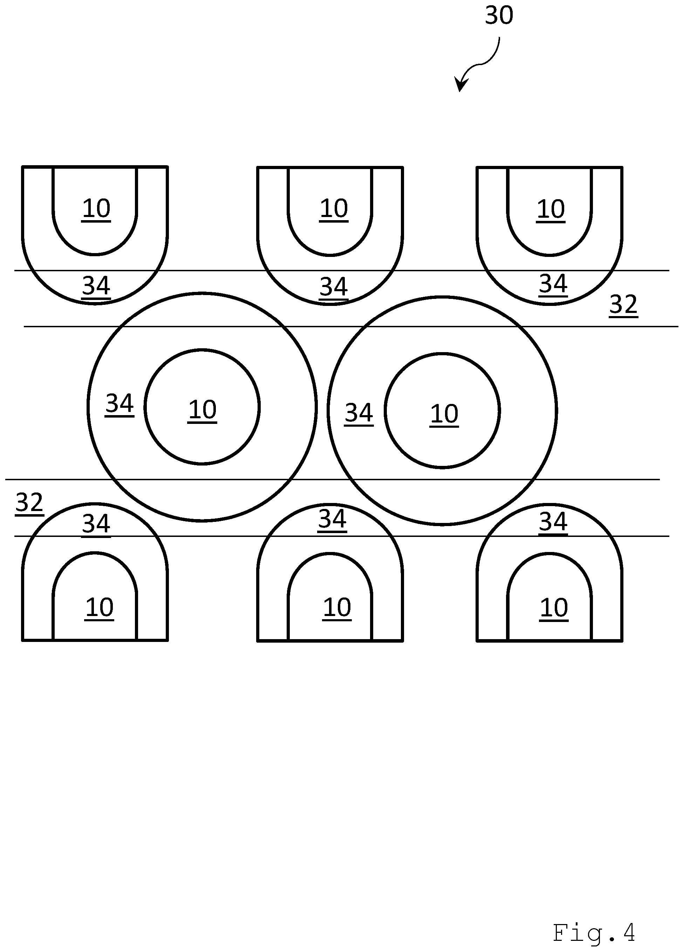

Figur 4 zeigt eine schematische Darstellung der Kühlanordnung 30 zum Kühlen mindestens eines Bereichs 32 gemäß einem zweiten Ausführungsbeispiel. Das zweite Ausführungsbeispiel unterscheidet sich von dem ersten, in Figur 3 gezeigten, Ausführungsbeispiel durch Folgendes:
Die Kühlanordnung 30 umfasst vorliegend acht Vorrichtungen 10, die zwei Bereiche 32 kühlen. Die beiden Bereiche 32 können beabstandet zueinander angeordnet sein. Vorliegend sind zwei der acht Vorrichtungen 10 zwischen den beiden Bereichen 32 derart angeordnet, dass deren Kühlbereiche 34 in Überlappung mit den beiden Bereichen 32 sind. Mit anderen Worten, die beiden (in Figur 4 mittig) zwischen den beiden Bereichen 32 angeordneten Vorrichtungen 10 kühlen beide Bereiche 32.

Jeweils drei der Vorrichtungen 10 sind vorliegend derart angeordnet, dass deren Kühlbereiche 34 lediglich mit einem der beiden Bereiche 32 in Überlappung angeordnet sind. Damit weist jeder der beiden Bereiche 32 eine möglichst große Überlappung mit den Kühlbereichen 34 der acht Vorrichtungen 10 auf, so dass die beiden Bereiche 32 optimal gekühlt werden können.

Im Folgenden wird eine Verwendung der Vorrichtung 10 gemäß obiger Ausführungen oder der Kühlanordnung 30 gemäß obiger Ausführungen zu Kühlung mindestens eines Bereichs 32 beschrieben. Bei der Vorrichtung 10 kann es sich um eine in der Figur 1 oder Figur 2 gezeigte Vorrichtung 10 handeln. Bei der Kühlanordnung 30 kann es sich um eine in Figur 3 oder Figur 4 gezeigte Kühlanordnung handeln.

Bei dem Bereich 32 handelt es sich um einen von einer Person begehbaren Bereich. Der Bereich 32 ist insbesondere als ein Weg bzw. Straße ausgebildet. Der Bereich 32 kann ein Bereich sein, in dem sich eine Person aufhalten kann.

So kann die Vorrichtung 10 bzw. Kühlanordnung 30 zur Kühlung von bspw. innerstädtischen Bereichen, Wegen, Straßen und Ähnlichem eingesetzt werden.

Die Vorrichtung 10 oder die Kühlanordnung 30 können in einem Trinkbrunnen verwendet werden. Mit anderen Worten, die Vorrichtung 10 oder die Kühlanordnung 30 können in einem Trinkbrunnen integriert sein. So kann bspw. ein bereits vorhandener Trinkbrunnen mit der Vorrichtung 10 oder der Kühlanordnung 30 aufgerüstet bzw. aufgewertet werden.

## Patentansprüche

1. Vorrichtung (10) zum Versprühen von Flüssigkeit, insbesondere Wasser, umfassend:
- mindestens einen Elektrokatalysator (12) zum Reinigen der Flüssigkeit,
- einen Strom- und/oder Spannungsanschluss (14) zum Versorgen des Elektrokatalysators (12) mit elektrischem Strom und/oder elektrischer Spannung,
- einen Flüssigkeitsanschluss (16) zum Einleiten der Flüssigkeit in die Vorrichtung (10) und
- eine Düse (18) zum Versprühen der Flüssigkeit aus der Vorrichtung (10).

2. Vorrichtung (10) nach Anspruch 1, **dadurch gekennzeichnet, dass** die Vorrichtung (10) einen ersten Filter (20) zum Filtern der Flüssigkeit umfasst, wobei der erste Filter (20) als ein Membranfilter ausgebildet ist, wobei der erste Filter (20) nach dem Elektrokatalysator (12) angeordnet ist.

3. Vorrichtung (10) nach einem der Ansprüche 1 oder 2,
**dadurch gekennzeichnet, dass** die Vorrichtung (10) einen zweiten Filter (22) zum Filtern der Flüssigkeit umfasst, wobei der zweite Filter (22) vor dem Flüssigkeitsanschluss (16) angeordnet ist.

4. Vorrichtung (10) nach einem der voranstehenden Ansprüche, **dadurch gekennzeichnet, dass** die Vorrichtung (10) eine Pumpe (24) zum Fördern der Flüssigkeit umfasst.

5. Vorrichtung (10) nach einem der voranstehenden Ansprüche, **dadurch gekennzeichnet, dass** die Vorrichtung (10) eine Kühleinrichtung (26), insbesondere ein Peltier Element, zur Kühlung der Flüssigkeit umfasst.

6. Vorrichtung (10) nach einem der voranstehenden Ansprüche, **dadurch gekennzeichnet, dass** die Vorrichtung (10) eine Photovoltaik-Anlage (28) umfasst, wobei die Photovoltaik-Anlage (28) zur Versorgung des Elektrokatalysators (12), der Pumpe (24) und/oder der Kühleinrichtung (26) mit elektrischem Strom und/oder elektrischer Spannung ausgebildet ist.

7. Kühlanordnung (30) zum Kühlen mindestens eines Bereichs (32) umfassend mindestens eine Vorrichtung (10) nach einem der voranstehenden Ansprüche, wobei die Kühlanordnung (30) derart eingerichtet ist, dass die mittels der Düse (18) aus der Vorrichtung (10) versprühte Flüssigkeit zumindest bereichsweise in den Bereich (32) eingesprüht wird.

8. Kühlanordnung (30) nach Anspruch 7, **dadurch gekennzeichnet, dass** die Kühlanordnung (30) mehrere Vorrichtungen (10) umfasst, wobei die Vorrichtungen (10) an jeweils zwei gegenüberliegenden Seiten des Bereichs (32) versetzt zueinander angeordnet sind.

9. Verwendung einer Vorrichtung (10) nach einem der Ansprüche 1 bis 6 oder einer Kühlanordnung (30) nach Anspruch 7 oder 8, zur Kühlung mindestens eines Bereichs (32), wobei der Bereich (32) als ein von einer Person begehbarer Bereich, insbesondere als ein Weg, ausgebildet ist.

10. Verwendung nach Anspruch 9, **dadurch gekennzeichnet, dass** die Vorrichtung (10) oder die Kühlanordnung (30) in einen Trinkbrunnen integriert ist.
